# EUROPEAN PATENT SPECIFICATION

(11) **EP 2 365 756 B1**
(45) Date of publication and mention of the grant of the patent: **07.11.2018**
(21) Application number: 09771792.0
(22) Date of filing: 16.12.2009
(51) Int. Cl.: A21D 2/16, A23D 9/02, A23D 9/00, C11C 3/10

(54) **USE OF A PUMPABLE FAT COMPOSITION IN THE PREPARATION OF FARINACEOUS DOUGH AND PROCESS FOR THE MANUFACTURE OF SUCH FAT COMPOSITION**
VERWENDUNG EINER PUMPFÄHIGEN FETTZUSAMMENSETZUNG BEI DER ZUBEREITUNG EINES MEHLTEIGS UND VERFAHREN ZUR HERSTELLUNG EINER DERARTIGEN FETTZUSAMMENSETZUNG
UTILISATION D'UNE COMPOSITION DE GRAISSE POUVANT ÊTRE POMPÉE DANS LA PRÉPARATION DE PÂTE FARINEUSE ET PROCÉDÉ POUR LA FABRICATION D'UNE TELLE COMPOSITION DE GRAISSE

(30) Priority: 16.12.2008 MY 0805090; 16.02.2009 EP 09152890
(43) Date of publication of application: 21.09.2011
(73) Proprietor: Sime Darby Malaysia Berhad, Kuala Lumpur, 50350 (MY)
(72) Inventor: PAARDEKOOPER, Robert Hendrikus, NL-2953 GA Alblasserdam (NL); ZIEVERINK, Martinus Mathilda Pieter, NL-2613 RM Delft (NL); DE RUITER, Gerhard Adriaan, NL-5473 JE Heeswijk-Dinther (NL)
(74) Representative: Nederlandsch Octrooibureau
(86) International application number: PCT/NL2009/050771
(87) International publication number: WO 2010/071427

(56) References cited:
- EP-A- 1 057 887
- WO-A-96/14755
- WO-A-97/16978
- WO-A-2006/014322
- WO-A-2008/150169
- WO-A-2009/012888
- FR-A- 2 570 388
- US-A1- 2005 214 435
- US-A1- 2007 286 940

## Description

### TECHNICAL FIELD OF THE INVENTION

The present invention relates to a method of preparing a farinaceous dough comprising blending together flour, water, optional dough ingredients and a fat composition that is pumpable at ambient temperatures, that is characterised by a low content of saturated fatty acid residues, but that nonetheless enables the preparation of a good quality dough product that can easily be handled, even in mechanised dough manufacture.

### BACKGROUND OF THE INVENTION

Fat compositions used in the manufacture of farinaceous dough products usually contain high levels of saturated fatty acid residues (SAFA), e.g. 44% by weight of the total amount of fatty acid residues or more. Examples of fat components that are widely employed such dough fat compositions include butter oil, palm oil, palm kernel oil, coconut oil, hydrogenated vegetable oils and high melting stearin fractions of vegetable oils. A drawback of these fat components is the high amount of SAFA contained therein. It is generally accepted that fats having a high SAFA content, and consequently a low content of unsaturated fatty acids, do not fit in a healthy diet.

Hence, it would be desirable to replace these high SAFA fats by oils that contain substantially lower amounts of saturated fatty acids. However, in dough manufacture the use of pumpable fat compositions with high levels of low SAFA oils poses a problem. First of all, the use of significant amounts of low SAFA oils, such as sunflower oil and canola oil, normally yields a dough that is very sticky, especially during the first phase of the dough preparation process. In addition, low SAFA oils have the disadvantage that they are easily oxidised, especially during baking and subsequent storage. Oxidation of unsaturated vegetable oils leads to objectionable off-flavours that are often described as 'cardboard-like'.

Consequently, there is a need for pumpable fat compositions that contain substantially reduced SAFA levels and that can suitably be used in dough manufacture without giving rise to unacceptable dough stickiness or oil oxidation.

US 5,436,021 describes a process of preparing a pumpable fat-containing shortening product comprising:
a) chilling a fat-containing composition having an N20 value of from 12 to 22 to at or below its alpha crystallization point,
b) injecting into the chilled composition a stream of the fat-containing composition which has previously been crystallized and matured, and
c) mixing the composition thus obtained whereby a pumpable shortening having an N20 value of from 12 to 22 is obtained.
The examples of the US patent describe the preparation of a pumpable product starting from a hydrogenated mixture of soybean and cottonseed oils (94:6) having a solid fat content at 20 °C of 16-19% and at 30 °C of 10-14%.

US 5,718,938 describes bakery dough or batter comprising 5-80 wt.% of fat, wherein the fat is a mixture of triglycerides, which mixture displays:
- a SAFA content of less than 40 wt. %;
- a solid fat content at 20 °C of at least 10%,
the triglyceride mixture comprising at least triglycerides chosen from U₃, S₂U, U₂S and S₃, which triglycerides are present in amounts of:
- S₂U=5-50 wt. %;
- (U₂S+U₃) >35 wt. %;
- S₃=0-37 wt. %,
wherein
S means saturated or trans-fatty acid residues having 12-24 C atoms;
U means mono(cis) or polyunsaturated fatty acid residues having at least 18 C atoms; SAFA content is the total of saturated and trans-fatty acid residues taken as the total of all fatty acid residues (wt/wt).
Example 1 of the US 5,718,938 describes a fat blend comprising 30 wt.% of shea stearin, 65 wt.% of sunflower oil and 5 wt.% of palm stearin. This fat blend has a SAFA content of 31 wt.%, a solid fat content at 20 °C of 20.6% and at 30 °C of 4.3%. The blend had a very plastic texture which kept its structure when left to stand at room temperature.

US 2005/0214435 describes vegetable fat compositions that are particularly useful for use in the preparation of sponge cakes or cereal bars and that contain low levels (25-30%) of saturated fatty acids. The US patent application teaches fat composition having a solid fat content at 20 °C of 12-15% and at 30 °C of 7-9%. Example 1 describes a fat composition that contains 40% of palm oil, 59.76% of rapeseed oil, 0.2% of fatty acid monoglycerides and 0.04% of vitamin E.

US 2007/028940 describes vegetable fat composition for bakery applications that have a low SAFA and a low trans fatty acid content. The fat composition, described in the US patent application, contains:
- 6 to 20% SSS;
- 5 to less than 20% SUS;
- 5 to less than 25% SSU;
- 10 to 39% SU₂; and
- at least 20% U₃,
wherein S is a saturated fatty acid residue having 16 to 24 carbon atoms and U is an unsaturated fatty acid residue having at least 18 carbon atoms and all percentages are by weight based on the total triglycerides present in the composition;
the weight ratio SUS/SSU is between 0.5 and 2.0;
the weight ratio of (saturated fatty acid residues having 18 to 24 carbon atoms)/(saturated fatty acid residues having 16 carbon atoms) in the total S content of the triglycerides is less than 0.2; and
wherein the saturated fatty acid residue content of the triglycerides is less than 45% by weight of the total fatty acid residues in the triglycerides.

Example 1 of US 2007/028940 describes a reduced saturate shortening that is composed of 36 wt.% canola oil, 21 wt.% palm stearin (IV 35) and 43 wt.% interesterified palm olein (IV55). The shortening was prepared by passing the aforementioned fat blend through three cooling tubes with agitation to crystallise the blend into a smooth, semi-solid mass. The resulting shortening had a solid fat content at 20 °C of 23.89% and at 30 °C of 13.69%.

US 2007/286940 describes vegetable fat compositions that may be used to produce baked products and iced confectionary products. These vegetable fat compositions have a SAFA content of less than 45% and are characterized by the following triglyceride composition:
- 6-20% SSS,
- 5-20% SUS
- 5-25% SSU
- 10-39% SU₂ and
- at least 20% U₃,
wherein S is a saturated fatty acid residue having 16 to 24 carbon atoms and U is an unsaturated fatty acid residue having at least 18 carbon atoms. The Examples of US 2007/286940 describe the preparation of a fat blend having the following composition:

| | |
|---|---|
| Canola oil | - 33 kg; |
| Palm stearin (IV35) | - 19 kg; |
| Interesterified palm olein | - 39 kg. |

WO 2008/150169 describes a fat blend for use in the preparation of biscuits or crackers, said fat blend containing at least 30 wt.% of polyunsaturated fatty acids and comprising:
- 50-85 wt.% of a highly unsaturated oil selected from the group consisting of sunflower oil, soybean oil, rapeseed oil, cottonseed oil, saffiower oil, marine oil, corn oil, olive oil, linseed oil and combinations thereof; and
- 15-50 wt.% of a palm oil fraction having a melting point within the range of 27-38 °C; and
wherein said fat blend is further characterised by a solid fat content at 25 °C of less than 10 wt.%. Example 3 of WO 2008/150169 describes a fat blend having the following composition:

| | |
|---|---|
| Sunflower oil | - 80 wt.% |
| Interesterified blend (70:30) of palm stearin (IV=35) and palm kernel oil | - 15 wt.% |
| Pam oil super stearin (IV=12) | - 5 wt.% |

WO 2006/014322 describes a bakery shortening comprising about 11 % to about 18% by weight hard fat and about 82% to about 89% by weight liquid oil, said liquid oil having from about 0.1% to about 7% [alpha] linolenic acid based on total fatty acid content.

EP 1 057 887 A describes a shortening system for bakery application (e.g. cookies), comprises admixture of non hydrogenated vegetable oil, and stearin fraction(s) obtainable from glycerolysis/ interesterification of fat, oil.

WO 2009/012888 describes a composition, which may be used as a bakery fat, comprising: (A) from about 20 % to about 80 % by weight of an interesterified palm oil olein; (B) from about 5 % to about 25 % by weight of a liquid oil; (C) from about 15 to about 75 % by weight of a fat selected from the group consisting of palm oil stearins, interesterified palm oil stearins, palm oil oleins, fully hydrogenated oils and mixtures thereof.

### SUMMARY OF THE INVENTION

The present invention aims to provide a method of preparing a farinaceous dough according to claim 1.

A special feature of the aforementioned fatty acid composition is the high level of palmitic acid relative to other saturated fatty acids, e.g. stearic acid and C₈-C₁₄ saturated fatty acids. Another special feature is the relatively high content of triglycerides selected from the group consisting of PPM, PMP, PMM, MPM, PPU, PUP, PUU, UPU and/or the high level of OPO. High levels of PPM, PMP, PMM and MPM can be provided by an interesterified blend of a lauric fat and palm oil (or a palm oil fraction). High levels of PPU, PUP, PUU, UPU and/or high levels of OPO can be provided by an interesterified blend of palm stearin and low SAFA vegetable oil.

The inventors have found that the present fat composition, despite having a low SAFA content and being pumpable, can suitably be used to prepare farinaceous dough products with good handling properties, e.g. no stickiness. Furthermore, despite the high level of unsaturated fatty acids in the fat, the dough products and baked products made with the pumpable fat composition exhibit a surprisingly high oxidative stability.

### DETAILED DESCRIPTION OF THE INVENTION

Accordingly, one aspect of the present invention relates to method of preparing a farinaceous dough, according to claim 1.

The term "pumpable" as used herein refers to a fat composition that, at a temperature of 20 °C, can be transported by a gear pump, displacement pump etc.

The terms "oil" and "fat" are deemed to be synonyms and encompass lipids such as triglycerides, diglycerides, monoglycerides, phosphoglycerides etc. Preferably, the fat employed in accordance with the present invention is selected from the group consisting of triglycerides, diglycerides and combinations thereof. Most preferably, the fat employed is a triglyceride fat.

The term "fatty acid" as used herein refers to the fatty acid residues contained in the fat that is comprised in the pumpable fat composition.

The solid fat content of the present fat composition at a temperature of t °C (also referred to as the N-value Nₜ) equals the solid fat content of the fat in the composition at a temperature of t °C as measured by means of ISO 8292 - Animal and vegetable fats and oils - Determination of solid fat content - Pulsed nuclear magnetic resonance method.

Unless indicated otherwise, fatty acid concentrations are expressed as a percentage of the total weight of the fatty acids contained in the fat that is contained in, for instance, the pumpable fat composition, a dough or a baked dough product. The fatty acid concentrations are suitably determined by means of ISO 5509 - Animal and vegetable fats and oils - Preparation of methyl esters of fatty acids and ISO 5508 - Animal and vegetable fats and oils - Analysis by gas chromatography of methyl esters of fatty acids.

The triglyceride composition of fats, unless indicated otherwise, is determined by HPLC silver ion chromatography, using the methodology described in "Separation of Triacylglycerol Species from Interesterified Oils by High-Performance Liquid Chromatography", Jeung Hee Lee et al.; J Amer Oil Chem Soc (2007) 84:211-217. It is noted that, for instance, the amount of low SAFA vegetable oil in the fat blend

according to the present invention can reliably be determined from the triglyceride composition of the fat blend.

Besides fat, the pumpable fat composition of the present invention may contain, for instance, water, anti-oxidants and flavouring. Preferably, the present fat composition contains at least 80 wt.% of fat, even more preferably at least 90 wt.% of fat and most preferably at least 95 wt.% of fat.

The amount of C₈-C₁₄ fatty acids contained in the pumpable fat composition preferably does not exceed 11 wt.%. Even more preferable, the pumpable fat composition contains 1-10 wt.% of C₈-C₁₄ fatty acids.

As mentioned herein before, the palmitic acid content of the pumpable fat composition is relatively high in comparison to the other saturated fatty acids. Preferably, the fat in the fat composition contains 16-34 wt.% of palmitic acid. Expressed differently, the fat preferably contains at least 40%, more preferably at least 50% and most preferably at least 60% of palmitic acid by weight of the total amount of saturated fatty acids. Typically, the amount of palmitic acid does not exceed 85% by weight the total amount of saturated fatty acids.

According to a particularly preferred embodiment of the present invention, the oleic acid represents a major fraction of the unsaturated fatty acids contained in the pumpable fat composition. Thus, the fat contained in the pumpable fat composition preferably contains at least 20 wt.% of oleic acid. Even more preferably, the fat contains at least 40 wt.% of oleic acid. Expressed differently, the fat preferably contains at least 30%, more preferably at least 40% and most preferably at least 48% oleic acid by weight of the total amount of unsaturated fatty acids.

The fat contained in the present fat composition advantageously contains one or more highly unsaturated vegetable oils. According to a particularly advantageous embodiment, the fat contained in the pumpable fat composition contains 32-80 wt.%, more preferably 35-60 wt.% of a low SAFA vegetable oil selected from the group consisting of rapeseed oil, sunflower oil, soybean oil, safflower oil and combinations thereof.
In a particularly preferred embodiment, the fat contained in the pumpable fat composition contains 5-14 wt.%, preferably 6-13 wt.% of triglycerides selected from the group consisting of PPM, PMP, PMM, MPM, PPU, PUP, PUU, UPU.

Fat of the pumpable fat composition comprises 15-60 wt.% of an interesterified fat blend containing 20-80 wt.% of a lauric fat and 80-20 wt.% of palm oil or a fraction thereof, said fat further being characterized in that it contains 5-18 wt.% of triglycerides selected from the group consisting of PPM, PMP, PMM, MPM; or said fat comprises 25-65 wt.% of an interesterified fat blend containing 50-80 wt.% of a palm stearin and 20-50 wt.% of a low SAFA vegetable oil having a SAFA content of less than 17 wt.%, the triglycerides UPU and OPO together representing 2.6-5.5 wt.%, preferably 2.7-4.5 wt.% of the fat. Most preferably, 2.6-4.5 wt.% of fat consists of OPO. Natural non-modified oils typically contain no more than traces of the triglycerides UPU and OPO. However, if a blend of 50-80 wt.% of a palm stearin and 20-50 wt.% of a low SAFA vegetable oil is interesterified, appreciable levels of these triglycerides are formed.

The aforementioned interesterified blend B differs from most natural oils and commercially available fat blends in that the weight ratio PPU: PUP is exceptionally high. Advantageously, the weight ratio PPU:PUP in the pumpable fat composition exceeds 1:2, more preferably said ratio exceeds 2:3 and most preferably it exceeds 1:1.

Likewise, the weight ratio PPM:PMP of the pumpable fat composition preferably 1:2, more preferably said ratio exceeds 2:3 and most preferably it exceeds 1:1.

The presence of substantial quantities of the aforementioned interesterified blends A and/or B in the present pumpable fat composition results in the presence of substantial levels of PPU and/or PPM triglycerides, especially in relation to the total amount of palmitic acid contained in the fat composition. Thus, it is preferred that at least 1.5%, more preferably 1.6-4.5% of the palmitic acid in the fat is contained in PPU or PPM triglycerides. Even more preferably at least 1.8% and most preferably at least 2% of the palmitic acid in the fat is contained in PPU and/or PPM triglycerides.

The inventors have found that pumpable fat compositions containing 15-80 wt.% of an interesterified fat blend as defined herein before exhibit excellent pumpability and storage stability. Furthermore, the use of adequate quantities of such an interesterified component enables the preparation of pumpable fat compositions that, despite low SAFA levels, enable the preparation of dough products that are easy to handle and that do not produce noticeable oxidation off-flavours during baking.

Typically, besides low SAFA vegetable oil and the interesterified fat blend the fat of the pumpable fat composition optionally contains up to 45 wt.% of other fat components.

In accordance with one advantageous embodiment of the invention, the pumpable fact composition contains:
A. 35-70 wt.%, preferably 30-70 wt.% of a low SAFA vegetable oil having a SAFA content of less than 17 wt.%;
B. Up to 40 wt.% of an interesterified fat blend of 50-80 wt.% of a palm stearin and 20-50 wt.% of a low SAFA vegetable oil having a SAFA content of less than 17 wt.%; and
C. 0-45 wt.%, preferably 5-40 wt.% of other fat components, preferably including 5-35 wt.% of palm oil or a fraction thereof.

According to another preferred embodiment, the pumpable fat composition contains:
A. 40-82 wt.% of a low SAFA vegetable oil having a SAFA content of less than 17 wt.%;
B. 18-60 wt.% of an interesterified blend of 20-80 wt.% of a lauric fat and 80-20 wt.% of palm oil or a fraction thereof;
C. 0-20 wt.% of other fat components.

The fat contained in the pumpable fat composition preferably has a solid fat content at 30 °C of at least 6%. Advantageously, the solid fat content at 30 °C does not exceed 15%, more preferably it does not exceed 13%, most preferably it does not exceed 12%. The solid fat content at 20 °C is preferably within the range of 12-23%, most preferably of 12-21%. Typically the solid fat content at 20 °C exceeds the solid fat content at 30 °C by at least 5%, preferably by at least 7%.

The fat of the pumpable fat composition typically has a melting point in the range of 30-46 °C. Preferably, the melting point of the fat lies in the range of 32-44 °C, most preferably in the range of 33-42 °C.

The benefits of the present invention are most pronounced when relatively high levels of the pumpable fat composition are employed in the final dough product. According to a preferred embodiment, the pumpable fat composition is employed in an amount of 12-85% by weight of flour, even more preferably in an amount of 45-80% by weight of flour.

Examples of types of dough in which the pumpable fat composition can advantageously be employed include bread dough, cookie dough, shortcake dough and cake dough. Preferably, the dough is selected from the cookie dough, shortcake dough and cake dough.

Another aspect of the invention relates to a farinaceous dough containing 5-45 wt.%, preferably 10-40 wt.%, more preferably 14-38 wt.% of a pumpable fat composition as defined herein before. The farinaceous dough advantageously contains 24-60 wt.% preferably 28-45 wt.% of flour and 3-40 wt.%, preferably 4-20 wt.% of water.

### EXAMPLES

### Example 1

A pumpable fat composition having a SAFA content of approximately 35 wt.% was prepared by combining the fat components depicted in Table 1A in the indicated amounts.

**Table 1A**

| | Wt.% |
|---|---|
| Palm oil | 24 |
| Palm soft stearin (IV=40)¹ | 10 |
| Interesterified blend² | 28 |
| Rapeseed oil | 38 |

| | |
|---|---|
| ¹ Olein fraction from palm stearin (IV=35) ² Fully randomised blend (67.5:32.5) of palm stearin (IV=35) and rapeseed oil | |

The pumpable fat composition was prepared by combining the above mentioned fat components, melting the resulting fat mixture, followed by passing said fat mixture through a scraped surface heat exchanger (A-unit) in which the fat mixture is cooled down to a temperature of less than 10 °C, and subsequently passing the cooled fat mixture through a pin stirred crystallizer (C-unit) operated at 100-800 rpm.

The fatty acid composition of the pumpable fat composition is depicted in Table 1B and the solid fat profile in Table 1C.

**Table 1B**

| *Fatty acid* | *Wt. %* |
|---|---|
| Lauric acid | <1 |
| Myristic acid | <1 |
| Palmitic acid | 30 |
| Stearic acid | 4 |
| Oleic acid | 45 |
| Linoleic acid | 14 |
| Linolenic acid | 5 |

**Table 1C**

| | |
|---|---|
| N₁₀ | 30.8% |
| N₂₀ | 15.8% |
| N₃₀ | 7.1% |
| N₃₅ | 4.6% |
| N₄₀ | 2.7% |
| | |
| Melting point | 36.3 °C |

The triglyceride composition of the fat contained in the pumpable fat composition is presented in Table 1D

**Table 1D**

| | Wt.% |
|---|---|
| PUP | 0.6 |
| PPU | 1.2 |
| PUU | 0.4 |
| UPU | 0.2 |
| PMP | 0.1 |
| PPM | 0.1 |
| MPM | 0.0 |
| PMM | 0.0 |
| | |
| OPO | 2.8 |

### Example 2

A pumpable fat composition having a SAFA content of approximately 40 wt.% was prepared by combining the fat components depicted in Table 2A in the indicated amounts.

**Table 2A**

| | Wt.% |
|---|---|
| Palm oil | 33 |
| Palm soft stearin (IV=40)¹ | 10 |
| Interesterified blend² | 30 |
| Rapeseed oil | 27 |

| | |
|---|---|
| ¹ Olein fraction from palm stearin (IV=35) ² Fully randomised blend (67.5:32.5) of palm stearin (IV=35) and rapeseed oil | |

The pumpable fat composition was prepared by combining the above mentioned fat components, melting the resulting fat mixture, followed by passing said fat mixture through a scraped surface heat exchanger (A-unit) in which the fat mixture is cooled down to a temperature of less than 10 °C, and subsequently passing the cooled fat mixture through a pin stirred crystallizer (C-unit) operated at 100-800 rpm.

The fatty acid composition of the pumpable fat composition is depicted in Table 2B and the solid fat profile in Table 2C.

**Table 2B**

| *Fatty acid* | *Wt.%* |
|---|---|
| Lauric acid | <1 |
| Myristic acid | <1 |
| Palmitic acid | 34 |
| Stearic acid | 4 |
| Oleic acid | 43 |
| Linoleic acid | 13 |
| Linolenic acid | 4 |

**Table 2C**

| | |
|---|---|
| N₁₀ | 36.9% |
| N₂₀ | 16.9% |
| N₃₀ | 8.5% |
| N₃₅ | 5.0% |
| N₄₀ | 2.6% |
| | |
| Melting point | 35.8 °C |

The triglyceride composition of the fat contained in the pumpable fat composition is presented in Table 2D

**Table 2D**

| | Wt.% |
|---|---|
| PUP | 0.7 |
| PPU | 1.3 |
| PUU | 0.4 |
| UPU | 0.2 |
| PMP | 0.1 |
| PPM | 0.1 |
| MPM | 0.0 |
| PMM | 0.0 |
| | |
| OPO | 3.2 |

### Example 3

A pumpable fat composition having a SAFA content of approximately 40 wt.% was prepared by combining the fat components depicted in Table 3A in the indicated amounts.

**Table 3A**

| | Wt.% |
|---|---|
| Interesterified blend¹ | 50 |
| Rapeseed oil | 50 |

| | |
|---|---|
| ¹ Fully randomised blend (65:35) of palm stearin (IV=35) and palm kernel oil | |

The pumpable fat composition was prepared by combining the above mentioned fat components, melting the resulting fat mixture, followed by passing said fat mixture through a scraped surface heat exchanger (A-unit) in which the fat mixture is cooled down to a temperature of less than 10 °C, and subsequently passing the cooled fat mixture through a pin stirred crystallizer (C-unit) operated at 100-800 rpm.

The fatty acid composition of the pumpable fat composition is depicted in Table 3B and the solid fat profile in Table 3C.

**Table 3B**

| *Fatty acid* | *Wt.%* |
|---|---|
| Lauric acid | 7 |
| Myristic acid | 3 |
| Palmitic acid | 25 |
| Stearic acid | 3 |
| Oleic acid | 41 |
| Linoleic acid | 13 |
| Linolenic | 5 |

**Table 3C**

| | |
|---|---|
| N₁₀ | 35.4% |
| N₂₀ | 20.7% |
| N₃₀ | 9.1% |
| N₃₅ | 4.0% |
| N₄₀ | 1.7% |
| | |
| Melting point | 36.0 °C |

The triglyceride composition of the fat contained in the pumpable fat composition is presented in Table 3D

**Table 3D**

| | Wt.% |
|---|---|
| PUP | 0.3 |
| PPU | 0.7 |
| PUU | 0.0 |
| UPU | 0.0 |
| PMP | 3.9 |
| PPM | 7.7 |
| MPM | 1.9 |
| PMM | 3.7 |
| | |
| OPO | 0.4 |

### Example 4 [not part of the invention]

A pumpable fat composition having a SAFA content of approximately 30 wt.% was prepared by combining the fat components depicted in Table 4A in the indicated amounts.

**Table 4A**

| | Wt.% |
|---|---|
| Palm soft stearin (IV=40) ¹ | 10 |
| Interesterified blend ² | 20 |
| Rapeseed oil | 70 |

| | |
|---|---|
| ¹ Olein fraction from palm stearin (IV=35) ² Fully randomised blend (65:35) of palm stearin (IV=35) and palm kernel oil | |

The pumpable fat composition was prepared by combining the above mentioned fat components, melting the resulting fat mixture, followed by passing said fat mixture through a scraped surface heat exchanger (A-unit) in which the fat mixture is cooled down to a temperature of less than 10 °C, and subsequently passing the cooled fat mixture through a pin stirred crystallizer (C-unit) operated at 100-800 rpm.

The fatty acid composition of the pumpable fat composition is depicted in Table 4B and the solid fat profile in Table 4C.

**Table 4B**

| *Fatty acid* | *Wt.%* |
|---|---|
| Lauric acid | 4 |
| Myristic acid | 2 |
| Palmitic acid | 16 |
| Stearic acid | 2 |
| Oleic acid | 49 |
| Linoleic acid | 17 |
| Linolenic acid | 8 |

**Table 4C**

| | |
|---|---|
| N₁₀ | |
| N₂₀ | 23 |
| N₃₀ | 15 |
| N₃₅ | |
| N₄₀ | |
| | |
| Melting point | |

The triglyceride composition of the fat contained in the pumpable fat composition is presented in Table 4D

**Table 4D**

| | Wt.% |
|---|---|
| PUP | 0.1 |
| PPU | 0.3 |
| PUU | 0.0 |
| UPU | 0.0 |
| PMP | 1.5 |
| PPM | 3.1 |
| MPM | 0.7 |
| PMM | 1.5 |
| | |
| OPO | 0.2 |

### Example 5

A pumpable fat composition having a SAFA content of approximately 30 wt.% was prepared by combining the fat components depicted in Table 5A in the indicated amounts.

**Table 5A**

| | Wt.% |
|---|---|
| Rapeseed oil | 43 |
| Interesterified blend¹ | 57 |

| | |
|---|---|
| ¹ Fully randomised blend (67.5:32.5) of palm stearin (IV=35) and rapeseed oil | |

The pumpable fat composition was prepared by combining the above mentioned fat components, melting the resulting fat mixture, followed by passing said fat mixture through a scraped surface heat exchanger (A-unit) in which the fat mixture is cooled down to a temperature of less than 10 °C, and subsequently passing the cooled fat mixture through a pin stirred crystallizer (C-unit) operated at 100-800 rpm.

The fatty acid composition of the pumpable fat composition is depicted in Table 5B and the solid fat profile in Table 5C.

**Table 5B**

| *Fatty acid* | *Wt.%* |
|---|---|
| Lauric acid | 0.5 |
| Myristic acid | 0.7 |
| Palmitic acid | 25.8 |
| Stearic acid | 3.7 |
| Oleic acid | 47.5 |
| Linoleic acid | 14.1 |
| Linolenic acid | 5.9 |

**Table 5C**

| | |
|---|---|
| N₁₀ | 28.1 |
| N₂₀ | 14.4 |
| N₃₀ | 6.8 |
| N₃₅ | 4.3 |
| N₄₀ | 1.8 |
| | |
| Melting point | 34.0 |

The triglyceride composition of the fat contained in the pumpable fat composition is presented in Table 5D

**Table 5D**

| | Wt. % |
|---|---|
| PUP | 1.3 |
| PPU | 2.5 |
| PUU | 0.8 |
| UPU | 0.4 |
| PMP | 0.1 |
| PPM | 0.2 |
| MPM | 0.0 |
| PMM | 0.0 |
| | |
| OPO | 3.6 |

### Example 6

A pumpable fat composition having a SAFA content of approximately 36 wt.% was prepared by combining the fat components depicted in Table 6A in the indicated amounts.

**Table 6A**

| | Wt.% |
|---|---|
| Rapeseed oil | 33 |
| Interesterified blend ¹ | 57 |
| Palm soft stearin (IV = 40) | 10 |

| | |
|---|---|
| ¹ Fully randomised blend (67.5:32.5) of palm stearin (IV=35) and rapeseed oil | |

The pumpable fat composition was prepared by combining the above mentioned fat components, melting the resulting fat mixture, followed by passing said fat mixture through a scraped surface heat exchanger (A-unit) in which the fat mixture is cooled down to a temperature of less than 10 °C, and subsequently passing the cooled fat mixture through a pin stirred crystallizer (C-unit) operated at 100-800 rpm.

The fatty acid composition of the pumpable fat composition is depicted in Table 6B and the solid fat profile in Table 6C.

**Table 6B**

| *Fatty acid* | *Wt.%* |
|---|---|
| Lauric acid | 0.4 |
| Myristic acid | 0.8 |
| Palmitic acid | 30.7 |
| Stearic acid | 4.0 |
| Oleic acid | 44.5 |
| Linoleic acid | 12.8 |
| Linolenic acid | 5.1 |

**Table 6C**

| | |
|---|---|
| N₁₀ | 36.2 |
| N₂₀ | 20.5 |
| N₃₀ | 10.0 |
| N₃₅ | 6.8 |
| N₄₀ | 3.9 |
| | |
| Melting point | 36.5 |

The triglyceride composition of the fat contained in the pumpable fat composition is presented in Table 6D

**Table 6D**

| | Wt. % |
|---|---|
| PUP | 1.3 |
| PPU | 2.5 |
| PUU | 0.8 |
| UPU | 0.4 |
| PMP | 0.1 |
| PPM | 0.2 |
| MPM | 0 |
| PMM | 0 |
| | |
| OPO | 3.6 |

### Example 7

A pumpable fat composition having a SAFA content of approximately 33 wt.% was prepared by combining the fat components depicted in Table 7A in the indicated amounts.

**Table 7A**

| | Wt.% |
|---|---|
| Sunflower oil | 70 |
| Interesterified blend ¹ | 30 |

| | |
|---|---|
| ¹ Fully randomised blend (65:35) of palm super stearin and palm kernel oil | |

The pumpable fat composition was prepared by combining the above mentioned fat components, melting the resulting fat mixture, followed by passing said fat mixture through a scraped surface heat exchanger (A-unit) in which the fat mixture is cooled down to a temperature of less than 10 °C, and subsequently passing the cooled fat mixture through a pin stirred crystallizer (C-unit) operated at 100-800 rpm.

The fatty acid composition of the pumpable fat composition is depicted in Table 7B and the solid fat profile in Table 7C.

**Table 7B**

| *Fatty acid* | *Wt.%* |
|---|---|
| Lauric acid | 5.0 |
| Myristic acid | 2.0 |
| Palmitic acid | 21.7 |
| Stearic acid | 3.7 |
| Oleic acid | 27.1 |
| Linoleic acid | 37.9 |
| Linolenic acid | 0.6 |

**Table 7C**

| | |
|---|---|
| N₁₀ | 27.1 |
| N₂₀ | 18.0 |
| N₃₀ | 8.9 |
| N₃₅ | 5.7 |
| N₄₀ | 2.8 |
| | |
| Melting point | 37.0 |

The triglyceride composition of the fat contained in the pumpable fat composition is presented in Table 7D

**Table 7D**

| | Wt. % |
|---|---|
| PUP | 0.2 |
| PPU | 0.4 |
| PUU | 0.0 |
| UPU | 0.0 |
| PMP | 2.3 |
| PPM | 4.6 |
| MPM | 1.1 |
| PMM | 2.2 |
| | |
| OPO | 0.2 |

### Example 8

A pumpable fat composition having a SAFA content of approximately 34 wt.% was prepared by combining the fat components depicted in Table 8A in the indicated amounts.

**Table 8A**

| | Wt.% |
|---|---|
| Sunflower oil | 60 |
| Interesterified blend ¹ | 30 |
| Palm soft stearin (IV = 40) | 10 |

| | |
|---|---|
| ¹ Fully randomised blend (70:30) of palm stearin (IV=35) and palmkernel oil | |

The pumpable fat composition was prepared by combining the above mentioned fat components, melting the resulting fat mixture, followed by passing said fat mixture through a scraped surface heat exchanger (A-unit) in which the fat mixture is cooled down to a temperature of less than 10 °C, and subsequently passing the cooled fat mixture through a pin stirred crystallizer (C-unit) operated at 100-800 rpm.

The fatty acid composition of the pumpable fat composition is depicted in Table 8B and the solid fat profile in Table 8C.

**Table 8B**

| *Fatty acid* | *Wt. %* |
|---|---|
| Lauric acid | 4.1 |
| Myristic acid | 1.9 |
| Palmitic acid | 23.4 |
| Stearic acid | 4.2 |
| Oleic acid | 29.6 |
| Linoleic acid | 34.4 |
| Linolenic acid | 0.5 |

**Table 8C**

| | |
|---|---|
| N₁₀ | 26.9 |
| N₂₀ | 16.1 |
| N₃₀ | 8.0 |
| N₃₅ | 5.0 |
| N₄₀ | 2.6 |
| | |
| Melting point | 36.0 |

The triglyceride composition of the fat contained in the pumpable fat composition is presented in Table 8D

**Table 8D**

| | Wt. % |
|---|---|
| PUP | 0.3 |
| PPU | 0.6 |
| PUU | 0.1 |
| UPU | 0.0 |
| PMP | 1.3 |
| PPM | 2.6 |
| MPM | 0.6 |
| PMM | 1.3 |
| | |
| OPO | 0.8 |

### Example 9

The pumpable fat compositions described in Examples 5-8 were used to prepare cookies on the basis of the following recipe:

| | |
|---|---|
| Flour | 100 |
| Pumpable fat composition | 76.5 |
| Sugar | 45 |
| Water | 13.5 |
| Whole egg | 10 |
| Salt | 1 |

The sugar, pumpable fat composition, water and salt were mixed, egg was added, and when there was enough air in the mixture flour was admixed. The cookies were baked at 170 °C during 27 minutes.

The handling properties of the cookie doughs so prepared were found to be satisfactory. In particular, none of the doughs tested was found to be sticky.

## Claims

1. A method of preparing a farinaceous dough, said method comprising blending together flour, a pumpable fat composition, water and optionally other bakery ingredients, wherein the pumpable fat composition has a low saturated fatty acid (SAFA) content and contains at least 70 wt.% of fat, said fat having a solid fat content at 20 °C of 12-25% and at 30 °C of 5-20% and further being **characterised by** the following fatty acid composition:
- 26-40 wt.% of SAFA;
- ≤ 12 wt.% of C₈-C₁₄ fatty acids;
- 15-35 wt.% of palmitic acid;
- ≤ 5 wt.% of stearic acid;
- ≥ 55 wt.% of unsaturated C₁₈ fatty acids; and
- ≤ 1.5 wt.% of trans-unsaturated fatty acids;
said fat containing 4-20 wt.% of triglycerides selected from the group consisting of PPM, PMP, PMM, MPM, PPU, PUP, PUU, UPU and/or 2.5-5.0 wt.% of OPO, wherein P represents palmitic acid, M represents C₈-C₁₄ fatty acid, U represents polyunsaturated C₁₈ fatty acid, O represent oleic acid and;
said fat comprising 15-60 wt.% of an interesterified fat blend containing 20-80 wt.% of a lauric fat and 80-20 wt.% of palm oil or a fraction thereof, and containing 5-18 wt.% of triglycerides selected from the group consisting of PPM, PMP, PMM, MPM; or
said fat comprising 25-65 wt.% of an interesterified fat blend containing 50-80 wt.% of a palm stearin and 20-50 wt.% of a low SAFA vegetable oil having a SAFA content of less than 17 wt.%, the triglycerides UPU and OPO together representing 2.6-5.5 wt.% of the fat.

2. Method according to claim 1, wherein the fat contained in the pumpable fat composition contains at least 20 wt.% of oleic acid, preferably at least 40 wt.% of oleic acid.

3. Method according to claim 1 or 2, wherein the fat contained in the pumpable fat composition contains 32-80 wt.% of a low SAFA vegetable oil selected from the group consisting of rapeseed oil, sunflower oil, soybean oil, safflower oil and combinations thereof.

4. Method according to any one of the preceding claims, wherein the fat contained in the pumpable fat composition is **characterised in that** the weight ratio PPU : PUP exceeds 1:2.

5. Method according to claim 4, wherein at least 1.5%, preferably 1.6-4.5% of the palmitic acid in the fat is contained in PPU and/or PPM triglycerides.

6. Method according to any one of the preceding claims, wherein the fat contained in the pumpable fat composition contains 5-14 wt.% of triglycerides selected from the group consisting of PPM, PMP, PMM, MPM, PPU, PUP, PUU, UPU.

7. Method according to any one of the preceding claims, wherein the fat contained in the pumpable fat composition contains:
- 40-82 wt.% of a low SAFA vegetable oil having a SAFA content of less than 17 wt.%;
- 18-60 wt.% of an interesterified blend of 20-80 wt.% of a lauric fat and 80-20 wt.% of palm oil or a fraction thereof; and
- 0-20 wt.% of other fat components.

8. Method according to any one of claims 1-6, wherein the fat contained in the pumpable fat composition contains:
• 30-70 wt.% of a low SAFA vegetable oil having a SAFA content of less than 17 wt.%;
• 25-65 wt.% of an interesterified fat blend of 50-80 wt.% of a palm stearin and 20-50 wt.% of a low SAFA vegetable oil having a SAFA content of less than 17 wt.%; and
• 0-45 wt.% of other fat components.

9. Method according to any one of the preceding claims, wherein the fat contained in the pumpable fat composition has a solid fat content at 30 °C of at least 6%.

10. Method according to any one of the preceding claims, wherein the fat contained in the pumpable fat composition has a solid fat content at 30 °C of not more than 13%.

11. Method according to any one of the preceding claims, wherein palmitic acid represents at least 60 wt.% of the SAFA.

12. Method according to any one of the preceding claims, wherein the pumpable fat composition is employed in an amount of 12-50% by weight of flour.

13. A farinaceous dough containing 5-45 wt.% of a pumpable fat composition as defined in any one of claims 1-11.

## Patentansprüche

1. Verfahren zum Herstellen eines Mehlteigs, wobei das Verfahren das Zusammenmischen von Mehl, einer pumpfähigen Fettzusammensetzung, Wasser und gegebenenfalls anderen Backzutaten umfasst, wobei die pumpfähige Fettzusammensetzung einen niedrigen Gehalt an gesättigter Fettsäure (SAFA) aufweist und wenigstens 70 Gew.-% Fett enthält, wobei das Fett einen Festfettgehalt bei 20 °C von 12-25 % und bei 30 °C von 5-20 % aufweist und außerdem durch die folgende Fettsäurezusammensetzung gekennzeichnet ist:
- 26-40 Gew.-% SAFA;
- ≤ 12 Gew.-% C₈-C₁₄-Fettsäuren;
- 15-35 Gew.-% Palmitinsäure;
- ≤ 5 Gew.-% Stearinsäure;
- ≥ 55 Gew.-% ungesättigte C₁₈-Fettsäuren; und
- ≤ 1,5 Gew.-% trans-ungesättigte Fettsäuren;
wobei das Fett 4-20 Gew.-% Triglyceride, ausgewählt aus der Gruppe bestehend aus PPM, PMP, PMM, MPM, PPU, PUP, PUU, UPU, und/oder 2,5-5,0 Gew.-% OPO enthält, wobei P Palmitinsäure bedeutet, M C₈-C₁₄-Fettsäure bedeutet, U mehrfach ungesättigte C₁₈-Fettsäure bedeutet, O Ölsäure bedeutet und;
wobei das Fett 15-60 Gew.-% einer umgeesterten Fettmischung umfasst, die 20-80 Gew.-% eines Laurinfetts und 80-20 Gew.-% Palmöl oder eine Fraktion davon enthält, und 5-18 Gew.-% Triglyceride, ausgewählt aus der Gruppe bestehend aus PPM, PMP, PMM, MPM, enthält; oder
wobei das Fett 25-65 Gew.-% einer umgeesterten Fettmischung umfasst, die 50-80 Gew.-% eines Palmstearins und 20-50 Gew.-% eines Pflanzenöls mit niedrigem SAFA-Gehalt, das einen SAFA-Gehalt von weniger als 17 Gew.-% aufweist, enthält, wobei die Triglyceride UPU und OPO zusammen 2,6-5,5 Gew.-% des Fetts darstellen.

2. Verfahren gemäß Anspruch 1, wobei das in der pumpfähigen Fettzusammensetzung enthaltene Fett wenigstens 20 Gew.-% Ölsäure, vorzugsweise wenigstens 40 Gew.-% Ölsäure enthält.

3. Verfahren gemäß Anspruch 1 oder 2, wobei das in der pumpfähigen Fettzusammensetzung enthaltene Fett 32-80 Gew.-% eines Pflanzenöls mit niedrigem SAFA-Gehalt, ausgewählt aus der Gruppe bestehend aus Rapsöl, Sonnenblumenöl, Sojaöl, Safloröl und Kombinationen davon, enthält.

4. Verfahren gemäß einem der vorangehenden Ansprüche, wobei das in der pumpfähigen Fettzusammensetzung enthaltene Fett **dadurch gekennzeichnet ist, dass** das Gewichtsverhältnis PPU : PUP 1 : 2 übersteigt.

5. Verfahren gemäß Anspruch 4, wobei wenigstens 1,5 %, vorzugsweise 1,6-4,5 % der Palmitinsäure in dem Fett in PPU und/oder PPM-Triglyceriden enthalten ist.

6. Verfahren gemäß einem der vorangehenden Ansprüche, wobei das in der pumpfähigen Fettzusammensetzung enthaltene Fett 5-14 Gew.-% Triglyceride, ausgewählt aus der Gruppe bestehend aus PPM, PMP, PMM, MPM, PPU, PUP, PUU, UPU, enthält.

7. Verfahren gemäß einem der vorangehenden Ansprüche, wobei das in der pumpfähigen Fettzusammensetzung enthaltene Fett enthält:
- 40-82 Gew.-% eines Pflanzenöls mit niedrigem SAFA-Gehalt, das einen SAFA-Gehalt von weniger als 17 Gew.-% aufweist;
- 18-60 Gew.-% einer umgeesterten Mischung aus 20-80 Gew.-% eines Laurinfetts und 80-20 Gew.-% Palmöl oder einer Fraktion davon; und
- 0-20 Gew.-% andere Fettkomponenten.

8. Verfahren gemäß einem der Ansprüche 1-6, wobei das in der pumpfähigen Fettzusammensetzung enthaltene Fett enthält:
• 30-70 Gew.-% eines Pflanzenöls mit niedrigem SAFA-Gehalt, das einen SAFA-Gehalt von weniger als 17 Gew.-% aufweist;
• 25-65 Gew.-% einer ungeesterten Fettmischung aus 50-80 Gew.-% eines Palmstearins und 20-50 Gew.-% eines Pflanzenöls mit niedrigem SAFA-Gehalt, das einen SAFA-Gehalt von weniger als 17 Gew.-% aufweist; und
• 0-45 Gew.-% andere Fettkomponenten.

9. Verfahren gemäß einem der vorangehenden Ansprüche, wobei das in der pumpfähigen Fettzusammensetzung enthaltene Fett einen Festfettgehalt bei 30 °C von wenigstens 6 % aufweist.

10. Verfahren gemäß einem der vorangehenden Ansprüche, wobei das in der pumpfähigen Fettzusammensetzung enthaltene Fett einen Festfettgehalt bei 30° C von nicht mehr als 13 % aufweist.

11. Verfahren gemäß einem der vorangehenden Ansprüche, wobei Palmitinsäure wenigstens 60 Gew.-% der SAFA darstellt.

12. Verfahren gemäß einem der vorangehenden Ansprüche, wobei die pumpfähige Fettzusammensetzung in einer Menge von 12-50 Gew.-% des Mehls eingesetzt wird.

13. Mehlteig enthaltend 5-45 Gew.-% einer pumpfähigen Fettzusammensetzung, wie sie in einem der Ansprüche 1-11 definiert ist.

## Revendications

1. Méthode de préparation d'une pâte farineuse, ladite méthode comprenant l'étape consistant à mélanger ensemble de la farine, une composition de matière grasse pouvant être pompée, de l'eau et facultativement d'autres ingrédients de boulangerie, dans laquelle la composition de matière grasse pouvant être pompée a une faible teneur en acides gras saturés (SAFA) et contient au moins 70 % en poids de matière grasse, ladite matière grasse ayant une teneur en matière grasse solide à 20°C de 12 à 25 %, et de 5 à 20 % à 30°C, et étant en outre **caractérisée par** la composition en acides gras suivante :
- 26 à 40 % en poids de SAFA ;
- ≤ 12 % en poids d'acides gras en C₈-C₁₄ ;
- 15 à 35 % en poids d'acide palmitique :
- ≤ 5 % en poids d'acide stéarique ;
- ≥ 55 % en poids d'acides gras insaturés en C₁₈ ; et
- 1,5 % en poids d'acides gras trans-insaturés ;
ladite matière grasse contenant de 4 à 20 % en poids de triglycérides choisis dans le groupe consistant en PPM, PMP, PMM, MPM, PPU, PUP, PUU, UPU et/ou de 2,5 à 5,0 % en poids d'OPO, dans laquelle P représente l'acide palmitique, M représente un acide gras en C₈-C₁₄, U représente un acide gras en C₁₈ polyinsaturé, O représente l'acide oléique et ;
ladite matière grasse comprenant de 15 à 60 % en poids d'un mélange de matière grasse inter-estérifié contenant de 20 à 80 % en poids d'une matière grasse laurique et de 80 à 20 % en poids d'huile de palme, ou d'une fraction de celle-ci, et contenant de 5 à 18 % en poids de triglycérides sélectionné dans le groupe consistant en PPM, PMP, PMM, MPM ; ou
ladite matière grasse comprenant de 25 à 65 % en poids d'un mélange de matière grasse inter-estérifié contenant de 50 à 80 % en poids de stéarine de palme et de 20 à 50 % en poids d'une huile végétale SAFA basse ayant une teneur en SAFA de moins de 17 % en poids, les triglycérides UPU et OPO représentant ensemble 2,6 à 5,5 % en poids de la matière grasse.

2. Méthode selon la revendication 1, dans laquelle la matière grasse contenue dans la composition de matière grasse pouvant être pompée contient au moins 20 % en poids d'acide oléique, de préférence au moins 40 % en poids d'acide oléique.

3. Méthode selon la revendication 1 ou 2, dans laquelle la matière grasse contenue dans la composition de matière grasse pouvant être pompée contient de 32 à 80 % en poids d'une huile végétale SAFA basse choisie dans le groupe consistant en huile de colza, huile de tournesol, huile de soja et huile de carthame, et des combinaisons de celles-ci.

4. Méthode selon l'une quelconque des revendications précédentes, dans laquelle la matière grasse contenue dans la composition de matière grasse pouvant être pompée est **caractérisée en ce que** le rapport pondéral PPU:PUP est supérieur à 1:2.

5. Méthode selon la revendication 4, dans laquelle au moins 1,5 %, de préférence de 1,6 à 4,5 % de l'acide palmitique dans la matière grasse est contenu dans des triglycérides PPU et/ou PPM.

6. Méthode selon l'une quelconque des revendications précédentes, dans laquelle la matière grasse contenue dans la composition de matière grasse pouvant être pompée contient de 5 à 14 % en poids de triglycérides choisis dans le groupe constitué par PPM, PMP, PMM, MPM, PPU, PUP, PUU, UPU.

7. Méthode selon l'une quelconque des revendications précédentes, dans laquelle la matière grasse contenue dans la composition de matière grasse pouvant être pompée contient :
- de 40 à 82 % en poids d'une huile végétale SAFA basse ayant une teneur en SAFA inférieure à 17 % en poids ;
- de 18 à 60 % en poids d'un mélange inter-estérifié de 20 à 80 % en poids d'une matière grasse laurique et de 80 à 20 % en poids d'huile de palme, ou d'une fraction de celle-ci ; et
- de 0 à 20 % en poids d'autres composants de matière grasse.

8. Méthode selon l'une quelconque des revendications 1 à 6, dans laquelle la matière grasse contenue dans la composition de matière grasse pouvant être pompée contient :
- de 30 à 70 % en poids d'une huile végétale SAFA basse ayant une teneur en SAFA inférieure à 17 % en poids ;
- de 25 à 65 % en poids d'un mélange de matière grasse inter-estérifié de 50 à 80 % en poids d'une stéarine de palme et de 20 à 50 % en poids d'une huile végétale SAFA basse ayant une teneur en SAFA inférieure à 17 % en poids ; et
- de 0 à 45 % en poids d'autres composants de matière grasse.

9. Méthode selon l'une quelconque des revendications précédentes, dans laquelle la matière grasse contenue dans la composition de matière grasse pouvant être pompée a une teneur en matière grasse solide à 30°C d'au moins 6%.

10. Méthode selon l'une quelconque des revendications précédentes, dans laquelle la matière grasse contenue dans la composition de matière grasse pouvant être pompée a une teneur en matière grasse solide à 30°C de pas plus de 13 %.

11. Méthode selon l'une quelconque des revendications précédentes, dans laquelle l'acide palmitique représente au moins 60 % en poids des SAFA.

12. Méthode selon l'une quelconque des revendications précédentes, dans laquelle la composition de matière grasse pouvant être pompée est utilisée en une quantité de 12 à 50 % en poids de farine.

13. Pâte farineuse contenant de 5 à 45 % en poids d'une composition de matière grasse pouvant être pompée telle que définie dans l'une quelconque des revendications 1 à 11.
